# EUROPEAN PATENT APPLICATION

(11) **EP 2 607 926 A1**
(43) Date of publication of application: **26.06.2013**
(21) Application number: 11818108.0
(22) Date of filing: 10.08.2011
(51) Int. Cl.: G01S 19/37, G01S 19/30, H04B 1/7073

(54) **RECEIVER APPARATUS, RECEPTION METHOD AND COMPUTER PROGRAM**

(30) Priority: 17.08.2010 JP 2010182335
(71) Applicant: Sony Corporation, Tokyo 108-0075 (JP)
(72) Inventor: NITTA, Manabu, Tokyo 108-0075 (JP)
(74) Representative: Beder, Jens
(86) International application number: PCT/JP2011/068218
(87) International publication number: WO 2012/023466

(57) **Abstract**

There is provided a receiver apparatus including a receiving unit that receives a global positioning system (GPS) signal from a satellite in a GPS, a multiplying unit that multiplies the GPS signal received by the receiving unit by pseudo navigation data and an integrating unit that performs a synchronous addition on a signal, in which navigation data is removed from the GPS signal, serving as an output from the multiplying unit.

## Description

### Technical Field

The present invention relates to a receiver apparatus, a reception method, and a computer program.

### Background Art

In recent years, various electronic devices such as car navigation devices, mobile telephones, and digital still cameras have come equipped with a positioning function using the Global Positioning System (GPS). Typically, when the GPS is used in an electronic device, a GPS module receives signals from four or more GPS satellites, measures the position of the device based on the reception signals, and notifies a user of a measurement result through a screen of a display device or the like. More specifically, the GPS module demodulates the reception signals, acquires trajectory data of each GPS satellite, and derives a three-dimensional (3D) position of the device based on the trajectory data, time information, and a delay time of the reception signal by a simultaneous equation. Using four or more GPS satellites as a reception target, influence of an error between an internal time of a module and a time of a satellite can be reduced.

Here, a signal (an L1 band and a C/A code) transmitted from the GPS satellite is a signal in which Binary Phase Shift Keying (BPSK) modulation is further performed on a spread spectrum signal, which has undergone spread spectrum modulation on data of 50 bps by a gold code with a code length of 1023 and a chip rate of 1.023 MHz, using a carrier of 1575.42 MHz. Thus, in order for the GPS module to receive the signal from the GPS satellite, it is necessary to acquire synchronization of a spread code, a carrier, and data.

Generally, a GPS module mounted in an electronic device performs frequency conversion from a carrier frequency of a reception signal to an intermediate frequency (IF) of several MHz or less, and then performs the synchronization process. For example, a typical IF is 4.092 MHz, 1.023 MHz, 0 Hz, or the like. Typically, a signal level of the reception signal is smaller than a signal level of thermal noise, and a signal to noise (S/N) ratio is smaller than 0 dB, but the signal can be demodulated by a processing gain of a spread spectrum scheme. In the case of a GPS signal, for example, a processing gain on a data length of 1 bit is 10 Log (1.023 MHz/50) ≈ 43 dB.

In the past, GPS receivers were mainly used in car navigation systems, but GPS receivers have recently been mounted in mobile telephones, digital still cameras, and the like, and the market for the GPS receivers is growing. In terms of performance, sensitivity has been improved, and thus GPS receivers having receiving sensitivity of -150 to -160 dBm are being proliferated.

### Citation List

### Patent Literature

Patent Literature 1: JP 4164662B

### Summary of Invention

### Technical Problem

With the spread of the GPS receivers, for the sake of hitherto unheard of the indoor use, expectations for improvements in the receiving sensitivity of the GPS signal are increasing more and more.

In a spread spectrum wireless system such as the GPS, a synchronous addition of a reception signal is usually used as a technique of improving the receiving sensitivity. The GPS signal is a periodic signal of 1 ms, but since the GPS signal is multiplied by navigation data of 50 bps, the synchronous addition of the GPS signal is typically allowed to be performed repeatedly only up to 20 times, that is, up to 20 ms.

In this regard, for example, in an A-GPS, navigation data by which the GPS signal is multiplied can be acquired from a network in advance, and by multiplying the received GPS signal by the acquired navigation data, the navigation data by which the GPS signal is multiplied is removed, and thus the synchronous addition can be performed over a long time.

However, in the technique of improving the receiving sensitivity using the previously acquired navigation data as in the A-GPS, there is a problem in that the GPS receiver needs to be connected to a network in order to acquire the navigation data.

In this regard, the present invention is made in light of the foregoing, and the present invention is directed to provide a receiver apparatus, a reception method, and a computer program, which are novel and improved and capable of improving the receiving sensitivity of the GPS signal.

### Solution to Problem

The present technology is provided to solve the above-mentioned issues. According to an embodiment of the present technology, there is provided a receiver apparatus including a receiving unit that receives a global positioning system (GPS) signal from a satellite in a GPS, a multiplying unit that multiplies the GPS signal received by the receiving unit by pseudo navigation data, and an integrating unit that performs a synchronous addition on a signal, in which navigation data is removed from the GPS signal, serving as an output from the multiplying unit.

The receiver apparatus may further include a storage unit that stores the navigation data included in the GPS signal received by the receiving unit, and a generating unit that generates the pseudo navigation data using the navigation data stored in the storage unit.

The generating unit may calculate a probability of occurrence of each of all bit patterns of a bit string of a bit length N in the navigation data, and decide a bit string of a bit length N to be used as the pseudo navigation data based on a calculation result.

The generating unit may calculate an expectation value of a gain of a result of the synchronous addition when a plurality of bit strings of the bit length N that differ in a bit pattern are used as the pseudo navigation data, and decide a plurality of bit strings of the bit length N that differ in the bit pattern which is to be used as the pseudo navigation data based on a calculation result.

The generating unit may calculate a number of bit inversions of each of all the bit patterns of the bit string of the bit length N, and decide the bit string of the bit length N to be used as the pseudo navigation data based on a calculation result.

Further, in order to solve the above-mentioned issues, according to an embodiment of the present technology, there is provided a reception method including the steps of receiving a global positioning system (GPS) signal from a satellite in a GPS, multiplying the GPS signal received in the step of receiving the GPS signal by pseudo navigation data, and integrating for performing a synchronous addition on a signal, in which navigation data is removed from the GPS signal, serving as an output in the step of multiplying the GPS signal.

Further, in order to solve the above-mentioned issues, according to an embodiment of the present technology, there is provided a computer program for causing a computer to execute the steps of receiving a global positioning system (GPS) signal from a satellite in a GPS, multiplying the GPS signal received in the step of receiving the GPS signal by pseudo navigation data, and integrating for performing a synchronous addition on a signal, in which navigation data is removed from the GPS signal, serving as an output in the step of multiplying the GPS signal.

### Advantageous Effects of Invention

As described above, according to the present invention, the receiving sensitivity of the GPS signal can be improved.

### Brief Description of Drawings

[Fig. 1] Fig. 1 is a block diagram illustrating an example of a hardware configuration of a GPS module according to the present invention.
[Fig. 2] Fig. 2 is a block diagram illustrating an example of a detailed configuration of a synchronization acquiring unit illustrated in Fig. 1.
[Fig. 3] Fig. 3 is a block diagram illustrating another example of a detailed configuration of the synchronization acquiring unit illustrated in Fig. 1.
[Fig. 4] Fig. 4 is an explanatory diagram illustrating an example of a peak of a correlation signal output from a digital matched filter.
[Fig. 5] Fig. 5 is an explanatory diagram for describing a configuration of the main parts of a GPS receiver according to an embodiment of the present invention.
[Fig. 6] Fig. 6 is an explanatory diagram for describing a functional configuration of main parts of the GPS receiver illustrated in Fig. 5.
[Fig. 7] Fig. 7 is a flowchart of a synchronization timing detecting process executed by the GPS receiver illustrated in Fig. 5.
[Fig. 8] Fig. 8 is a flowchart of a pseudo navigation data generating process executed by the GPS receiver illustrated in Fig. 5.
[Fig. 9] Fig. 9 is a flowchart of a first pseudo navigation data generating process executed in step S202 in the pseudo navigation data generating process of Fig. 8.
[Fig. 10] Fig. 10 is a flowchart of a second pseudo navigation data generating process executed in step S202 in the pseudo navigation data generating process of Fig. 8.
[Fig. 11] Fig. 11 is a flowchart of a third pseudo navigation data generating process executed in step S202 in the pseudo navigation data generating process of Fig. 8.
[Fig. 12] Fig. 12 is a flowchart of a fourth pseudo navigation data generating process executed in step S202 in the pseudo navigation data generating process of Fig. 8.
[Fig. 13] Fig. 12 is an explanatory diagram for describing a calculation result of a probability of occurrence.
[Fig. 14] Fig. 14 is an explanatory diagram for describing a case in which a multiplication timing at which reception data is multiplied by pseudo navigation data is mismatched.
[Fig. 15] Fig. 15 is an explanatory diagram for describing a calculation result of an expectation value.
[Fig. 16] Fig. 16 is an explanatory diagram for describing a calculation result of an expectation value.

### Description of Embodiments

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Further, the description will proceed in the following order.
1. Hardware Configuration of GPS Module According to Present Invention
2. Configuration of Main Part of GPS Receiver
3. Functional Configuration of Main Parts of GPS Receiver
4. Synchronization Timing Detecting Process
5. Pseudo Navigation Data Generating Process

### [1. Hardware Configuration of GPS Module According to Present Invention]

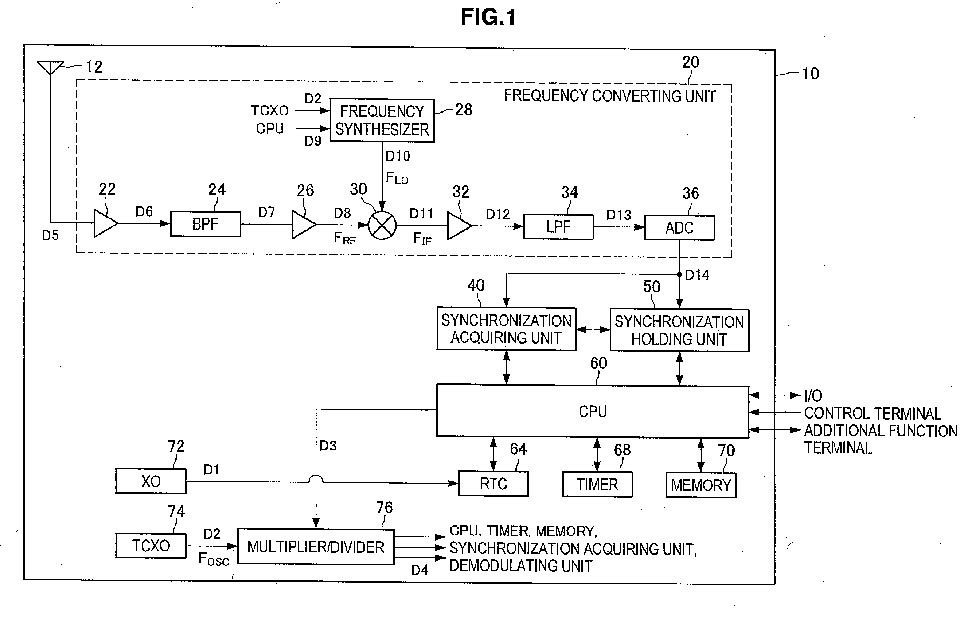

First, a hardware configuration of a GPS module according to the present disclosure will be described. Fig. 1 is a block diagram illustrating an example of a hardware configuration of a GPS module 10 according to the present disclosure. Hereinafter, the hardware configuration of the GPS module will be described with reference to Fig. 1.

Referring to Fig. 1, the GPS module 10 includes an antenna 12, a frequency converting unit 20, a synchronization acquiring unit 40, a synchronization holding unit 50, a central processing unit (the CPU 60) 60, a real time clock (RTC) 64, a timer 68, a memory 70, an XO (a crystal oscillator, an X'tal Oscillator) 72, a temperature compensated X'tal oscillator (TCXO) 74, and a multiplier/divider 76.

The XO 72 oscillates a signal D1 having a predetermined frequency (for example, about 32.768 kHz), and supplies the oscillated signal D1 to the RTC 64. The TCXO 74 oscillates a signal D2 having a different frequency (for example, about 16.368 MHz) from that of the XO 72, and supplies the oscillated signal D2 to the multiplier/divider 76 and a frequency synthesizer 28.

The multiplier/divider 76 performs either or both of multiplication and division on the signal D2 supplied from the TCXO 74 based on an instruction from the CPU 60. Then, the multiplier/divider 76 supplies a signal D4 obtained by performing either or both of multiplication and division to the frequency synthesizer 28 of the frequency converting unit 20, an analog-to-digital converter (ADC) 36, the CPU 60, the timer 68, the memory 70, the synchronization acquiring unit 40, and the synchronization holding unit 50.

The antenna 12 receives a GPS signal (for example, a radio frequency (RF) signal in which a carrier of 1575.42 MHz is spread) including navigation data or the like transmitted from a GPS satellite which is a satellite of the GPS, converts the GPS signal into an electric signal D5, and supplies the electric signal D5 to the frequency converting unit 20.

The frequency converting unit 20 includes a low noise amplifier (LNA) 22, a band pass filter (BPF) 24, an amplifier 26, a frequency synthesizer 28, a multiplier 30, an amplifier 32, a low pass filter (LPF) 34, and an analog digital converter (ADC) 36. The frequency converting unit 20 down-converts the signal D5 having a high frequency of 1575.42 MHz received through the antenna 12 into a signal D14 having, for example, a frequency of about 1.023 MHz for simple digital signal processing as will be described below.

The LNA 22 amplifies the signal D5 supplied from the antenna 12, and supplies the amplified signal to the BPF 24. The BPF 24 is configured with a surface acoustic wave (SAW) filter, extracts a specific frequency component from a frequency component of a signal D6 amplified by the LNA 22, and supplies the extracted frequency component to the amplifier 26. The amplifier 26 amplifies a signal D7 (a frequency F_{RF}) having the frequency component extracted by the BPF 24, and supplies the amplified signal to the multiplier 30.

The frequency synthesizer 28 generates a signal D10 having a frequency F_{LO} using the signal D2 supplied from the TCXO 74 based on an instruction D9 from the CPU 60. Then, the frequency synthesizer 28 supplies the generated signal D10 having the frequency F_{LO} to the multiplier 30.

The multiplier 30 multiplies the signal D8 having the frequency F_{RF} supplied from the amplifier 26 by the signal D10 having the frequency F_{LO} supplied from the frequency synthesizer 28. In other words, the multiplier 30 converts the frequency signal down to an IF signal D11 (for example, an IF frequency signal having a frequency of about 1.023 MHz).

The amplifier 32 amplifies the IF signal D11 down-converted by the multiplier 30, and supplies the amplified IF signal to the LPF 34.

The LPF 34 extracts a low-frequency component from the frequency component of the IF signal D12 amplified by the amplifier 30, and supplies a signal D13 having the extracted low-frequency component to the ADC 36. Fig. 1 has been described in connection with the example in which the LPF 34 is arranged between the amplifier 32 and the ADC 36, but a BPF may be arranged between the amplifier 32 and the ADC 36.

The ADC 36 converts the IF signal D13 of the analog type supplied from the LPF 34 into a signal of a digital type by sampling, and supplies an IF signal D14 converted into the signal of the digital type to the synchronization acquiring unit 40 and the synchronization holding unit 50 bit by bit.

The synchronization acquiring unit 40 performs synchronization acquisition on a pseudo-random noise (PRN) code of the IF signal D14 supplied from the ADC 36 using the signal D4 supplied from the multiplier/divider 76 based on control by the CPU 60. Further, the synchronization acquiring unit 40 detects a carrier frequency of the IF signal D14. Then, the synchronization acquiring unit 40 supplies the phase of the PRN code, the carrier frequency of the IF signal D14, or the like to the synchronization holding unit 50 and the CPU 60.

The synchronization holding unit 50 holds synchronization of the PRN code and the carrier of the IF signal D14 supplied from the ADC 36 using the signal D4 supplied from the multiplier/divider 76 based on control by the CPU 60. More specifically, the synchronization holding unit 50 operates using the phase of the PRN code or the carrier frequency of the IF signal D14 supplied from the synchronization acquiring unit 40 as an initial value. Then, the synchronization holding unit 50 demodulates navigation data included in the IF signal D14 supplied from the ADC 36, and supplies the demodulated navigation data, the phase of the PRN code and the carrier frequency of high accuracy to the CPU 60.

The CPU 60 calculates the position of the GPS module 10 by calculating the position and the speed of each GPS satellite based on the navigation data, the phase of the PRN code, and the carrier frequency supplied from the synchronization holding unit 50. Further, the CPU 60 may correct the time information of the RTC 64 based on the navigation data. Further, the CPU 60 may be connected to a control terminal, an input/output (I/O) terminal, an additional function terminal, or the like and execute various kinds of control processes.

The RTC 64 measures a time using the signal D1 having a predetermined frequency supplied from the XO 72. The time measured by the RTC 64 is appropriately corrected by the CPU 60.

The timer 68 counts a time using the signal D4 supplied from the multiplier/divider 76. The timer 68 is referred to, for example, when a decision on a start timing of various kinds of control by the CPU 60 is made. For example, the CPU 60 refers to the timer 68 when deciding a timing to start an operation of a PRN code generator of the synchronization holding unit 50 based on the phase of the PRN code acquired by the synchronization acquiring unit 40.

The memory 70 includes a random access memory (RAM), a read-only memory (ROM), or the like, and has a function as a work space used by the CPU 60, a program storage unit, a navigation data storage unit, or the like. In the memory 70, the RAM is used as a work area when various kinds of processes are performed by the CPU 60 or the like. In addition, the RAM may be used for buffering of various kinds of input data and to hold the ephemeris and the almanac which are trajectory information of the GPS satellite obtained by the synchronization holding unit 50 and interim data or calculation result data generated in a calculation process. Further, in the memory 70, the ROM is used as a means for storing various kinds of programs, fixed data, or the like. In the memory 70, a non-volatile memory may be used as a means for storing the ephemeris and the almanac which are the trajectory information of the GPS satellite, position information of a positioning result, an error amount of the TCXO 74, or the like while the GPS module 10 is powered off.

In the configuration of the GPS module 10 illustrated in Fig. 1, the blocks excluding the XO 72, the TCXO 74, the antenna 12, and the BPF 24 may be mounted in an integrated circuit configured with a single chip.

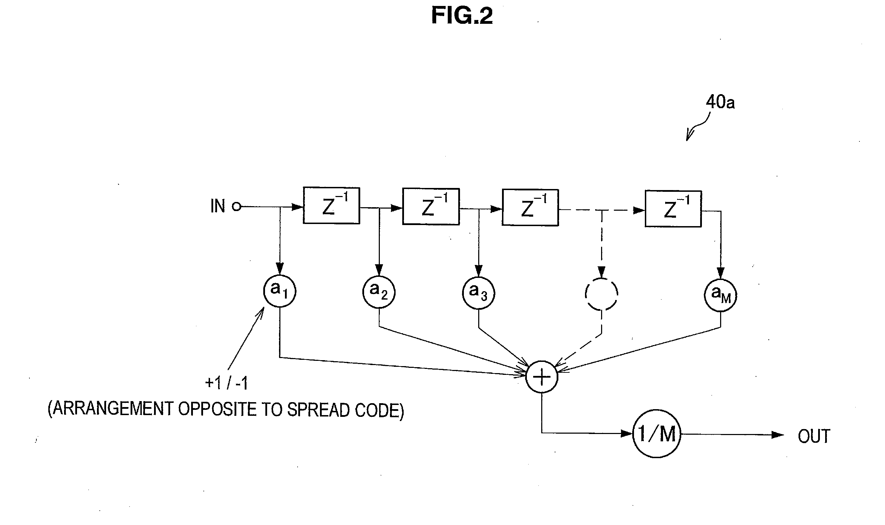

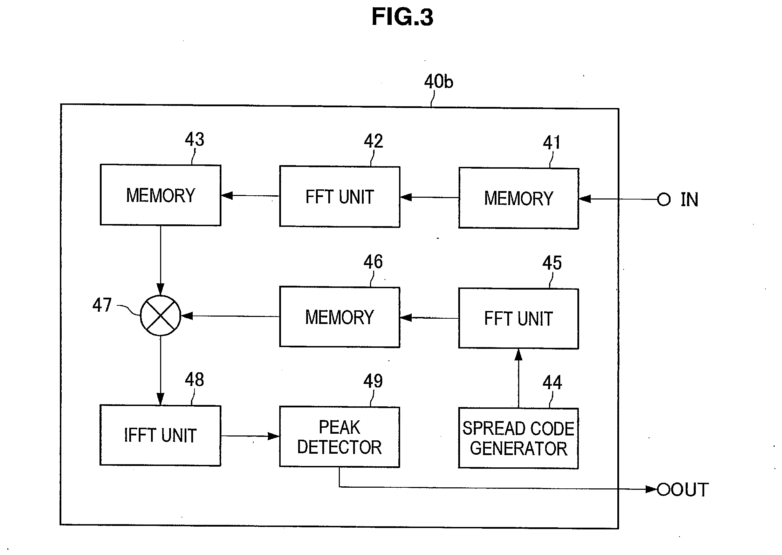

In addition, the synchronization acquiring unit 40 uses a matched filter, for example, in order to perform synchronization acquisition of a spread code at a high speed. Specifically, for example, the synchronization acquiring unit 40 may use a so-called transversal filter 40a illustrated in Fig. 2 as the matched filter. Alternatively, for example, the synchronization acquiring unit 40 may use a digital matched filter 40b using a fast Fourier transform (FFT) illustrated in Fig. 3 as the matched filter.

For example, referring to Fig. 3, the digital matched filter 40b includes a memory 41, an FFT unit 42, a memory 43, a spread code generator 44, an FFT unit 45, a memory 46, a multiplier 47, an inversed fast Fourier transform (IFFT) unit 48, and a peak detector 49.

The memory 41 buffers the IF signal sampled by the ADC 36 of the frequency converting unit 20. The FFT unit 42 reads the IF signal buffered by the memory 41 and performs the FFT on the IF signal. The memory 43 buffers a frequency domain signal converted from the IF signal of the time domain which has been subjected to the FFT in the FFT unit 42.

Meanwhile, the spread code generator 44 generates the same spread code as a spread code in the RF signal received from the GPS satellite. The FFT unit 45 performs the FFT on the spread code generated by the spread code generator 44. The memory unit 46 buffers the spread code of the frequency domain converted from the spread code of the time domain by the FFT in the FFT unit 45.

The multiplier 47 multiplies the frequency domain signal buffered in the memory 43 by the spread code of the frequency domain buffered in the memory 46. The IFFT unit 48 performs an inverse FFT on the multiplied frequency domain signal output from the multiplier 47. As a result, a correlation signal of the time domain between the spread code in the RF signal from the GPS satellite and the spread code generated by the spread code generator 44 is acquired. Then, the peak detector 49 detects a peak of the correlation signal output from the IFFT unit 48.

The digital matched filter 40b may be implemented as software executing processes of the respective units such as the FFT units 42 and 45, the spread code generator 44, the multiplier 47, the IFFT unit 48, and the peak detector 49 using a digital signal processor (DSP).

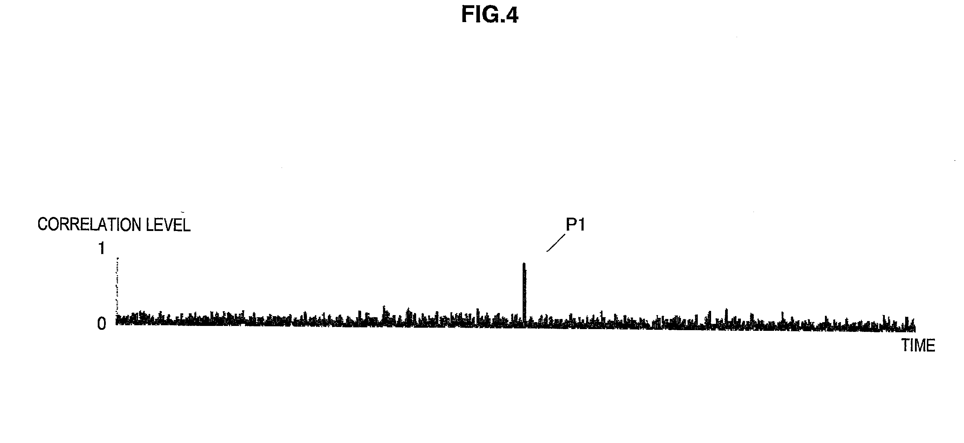

Fig. 4 is an explanatory diagram illustrating an example of a peak of the correlation signal acquired by the digital matched filter 40a or 40b. Referring to Fig. 4, a peak P1 at which a correlation level protrudes in an output waveform of a correlation signal corresponding to one period is detected. The position of the peak P1 on a time axis corresponds to the head of the spread code. In other words, the synchronization acquiring unit 40 can detect synchronization of the reception signal received from the GPS satellite (that is, detect the phase of the spread code) by detecting the peak P1.

### [2. Configuration of Main Part of GPS Receiver]

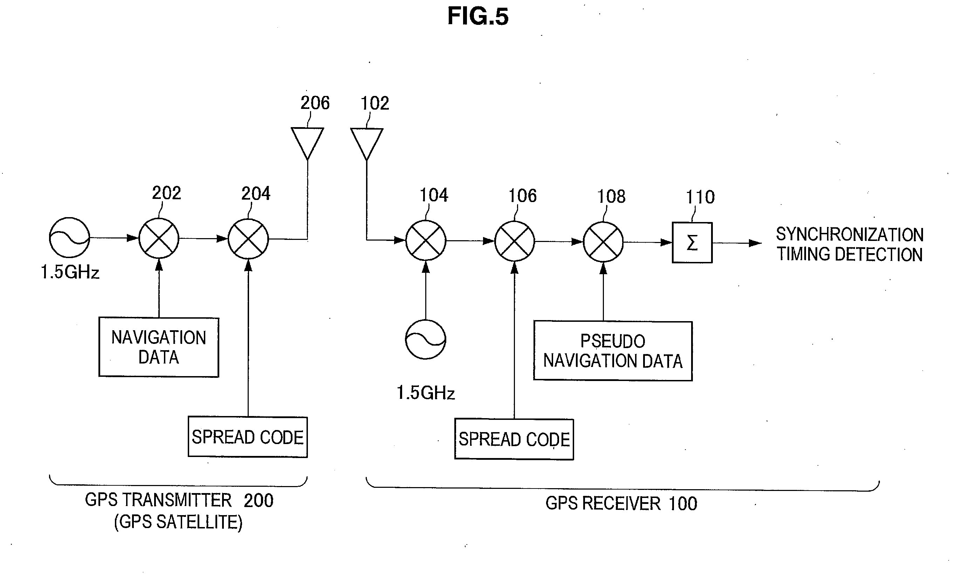

Next, a configuration of a main part of a GPS receiver according to an embodiment of the present invention will be described. Fig. 5 is an explanatory diagram for describing a configuration of a main part of a GPS receiver according to the present embodiment. A GPS receiver 100 in Fig. 5 is assumed to include the GPS module 10 of Fig. 1 therein.

Referring to Fig. 5, the GPS receiver 100 includes an antenna 102, multipliers 104, 106, and 108, and an integrator 110. The antenna 102 is an example of a receiving unit according to the present invention. The multiplier 108 is an example of a multiplying unit according to the present invention. The integrator 110 is an example of an integrating unit according to the present invention. Further, a GPS transmitter 200 serving as a GPS satellite includes multipliers 202 and 204 and an antenna 206.

In the GPS transmitter 200, the multiplier 202 multiplies a carrier frequency of 1.5 GHz by navigation data. The multiplier 204 multiplies an output from the multiplier 202 by a spread code. The antenna 206 transmits an output from the multiplier 204 as a GPS signal.

In the GPS receiver 100, the antenna 102 receives the GPS signal transmitted from the GPS transmitter 200. For example, the antenna 102 corresponds to the antenna 12 illustrated in Fig. 1. The multiplier 104 multiplies the GPS signal received by the antenna 102 by a Sin/Cos wave of 1.5 GHz which is equivalent to the carrier frequency of the GPS. For example, the multiplier 104 corresponds to the frequency converting unit 20 illustrated in Fig. 1. The multiplier 106 multiplies a signal, in which the carrier frequency is removed, serving as an output from the multiplier 104 by a spread code of the GPS, that is, a pseudo random number using a gold code specific to each GPS satellite. For example, the multiplier 106 corresponds to the synchronization acquiring unit 40 illustrated in Fig. 1. The multiplier 108 multiplies a signal, in which the spread code is removed, serving as an output from the multiplier 106 by pseudo navigation data which will be described later. For example, the multiplier 108 corresponds to the synchronization acquiring unit 40 illustrated in Fig. 1. The integrator 110 performs the synchronous addition on a signal, in which the navigation data is removed, serving as an output from the multiplier 108 for a long time. For example, the integrator 110 corresponds to the synchronization acquiring unit 40 illustrated in Fig. 1. In addition, the GPS receiver 100 detects a synchronization timing using an output from the integrator 110.

### [3. Functional Configuration of Main Parts of GPS Receiver]

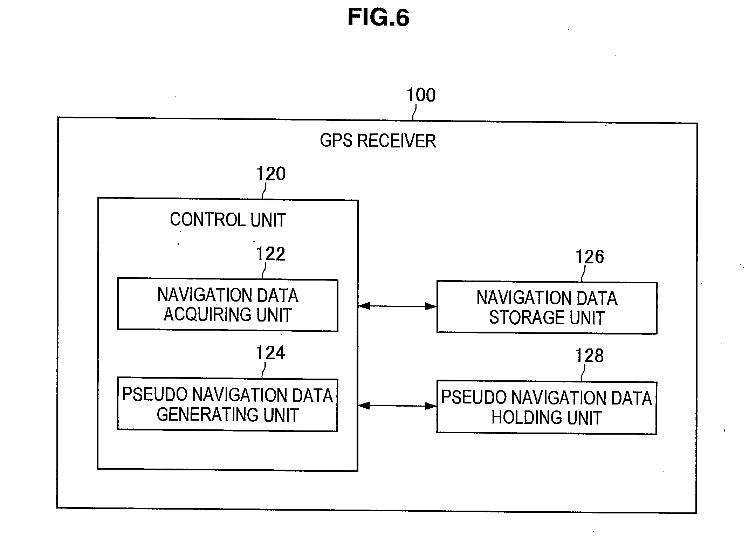

Next, a functional configuration of main parts of the GPS receiver 100 illustrated in Fig. 5 will be described. Fig. 6 is an explanatory diagram for describing the functional configuration of the main parts of the GPS receiver 100 illustrated in Fig. 5.

Referring to Fig. 6, the GPS receiver 100 includes a control unit 120, a navigation data storage unit 126, and a pseudo navigation data holding unit 128. The navigation data storage unit 126 is an example of a storage unit according to the present invention. The control unit 120 includes a navigation data acquiring unit 122 and a pseudo navigation data generating unit 124. The pseudo navigation data generating unit 124 is an example of a generating unit according to the present invention.

The navigation data acquiring unit 122 acquires navigation data from a received GPS signal, and causes the acquired navigation data to be stored in the navigation data storage unit 126. Further, the navigation data acquiring unit 122 acquires navigation data stored in the navigation data storage unit 126.

The pseudo navigation data generating unit 124 generates pseudo navigation data using the navigation data acquired by the navigation data acquiring unit 122, and causes the generated pseudo navigation data to be held in the pseudo navigation data holding unit 128. For example, the navigation data acquiring unit 122 and the pseudo navigation data generating unit 124 correspond to the CPU 60 illustrated in Fig. 1.

The navigation data storage unit 126 stores navigation data. The pseudo navigation data holding unit 128 holds pseudo navigation data. For example, the navigation data storage unit 126 and the pseudo navigation data holding unit 128 correspond to the memory 70 illustrated in Fig. 1.

### [4. Synchronization Timing Detecting Process]

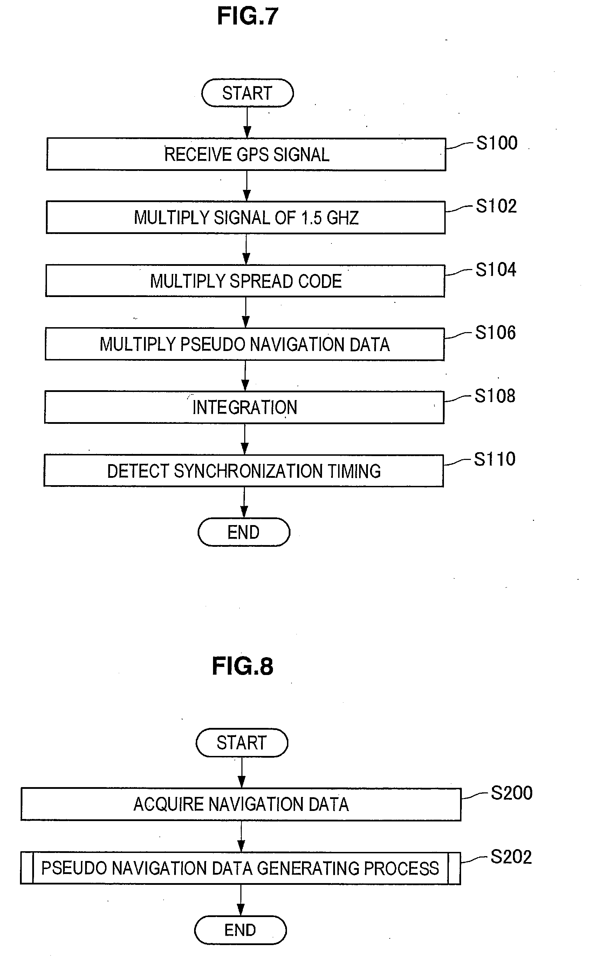

Next, a synchronization timing detecting process executed by the GPS receiver 100 illustrated in Fig. 5 will be described. Fig. 7 is a flowchart of the synchronization timing detecting process executed by the GPS receiver 100 illustrated in Fig. 5.

Referring to Fig. 7, first, the antenna 102 of the GPS receiver 100 receives a GPS signal transmitted from the GPS transmitter 200 serving as the GPS satellite (step S100).

Next, the multiplier 104 of the GPS receiver 100 multiplies the GPS signal received by the antenna 102 in step S100 by a Sin/Cos wave of 1.5 GHz which is equivalent to the carrier frequency of the GPS (step S102).

Next, the multiplier 106 of the GPS receiver 100 multiplies a signal, in which the carrier frequency is removed, serving as an output from the multiplier 104 by a spread code of the GPS, that is, a pseudo random number using a gold code specific to each GPS satellite (step S104).

Next, the multiplier 108 of the GPS receiver 100 multiplies a signal, in which the spread code is removed, serving as an output from the multiplier 106 by pseudo navigation data which will be described later (step S106).

Next, the integrator 110 of the GPS receiver 100 performs the synchronous addition on a signal, in which the navigation data is removed, serving as an output from the multiplier 108 for a long time (step S108).

Next, the GPS receiver 100 detects a synchronization timing using an output from the integrator 110 and then ends the present process.

According to the synchronization timing detecting process illustrated in Fig. 7, the received GPS signal is multiplied by the pseudo navigation data. Since the GPS signal is the periodic signal of 1 ms but the GPS signal is multiplied by the navigation data of 50 bps, the synchronous addition of the GPS signal is typically allowed to be performed repeatedly only up to 20 times, that is, up to 20 ms. However, by multiplying the GPS signal by the pseudo navigation data, the navigation data can be removed from the GPS signal, and thus the synchronous addition can be performed over a long time. As a result, even when the GPS signal is weak, a de-spread gain can be increased without being connected to a network, and the receiving sensitivity of the GPS signal can be improved.

### [5. Pseudo Navigation Data Generating Process]

Next, a pseudo navigation data generating process executed by the GPS receiver 100 illustrated in Fig. 5 will be described. Fig. 8 is a flowchart of the pseudo navigation data generating process executed by the GPS receiver 100 illustrated in Fig. 5. Here, the navigation data included in the GPS signal received by the GPS receiver 100 is assumed to remain stored in the navigation data storage unit 126 of the GPS receiver 100 before the present process is executed.

Referring to Fig. 8, first, the navigation data acquiring unit 122 of the GPS receiver 100 acquires the navigation data included in the GPS signal received before the present process is executed, which is stored in the navigation data storage unit 126 (step S200).

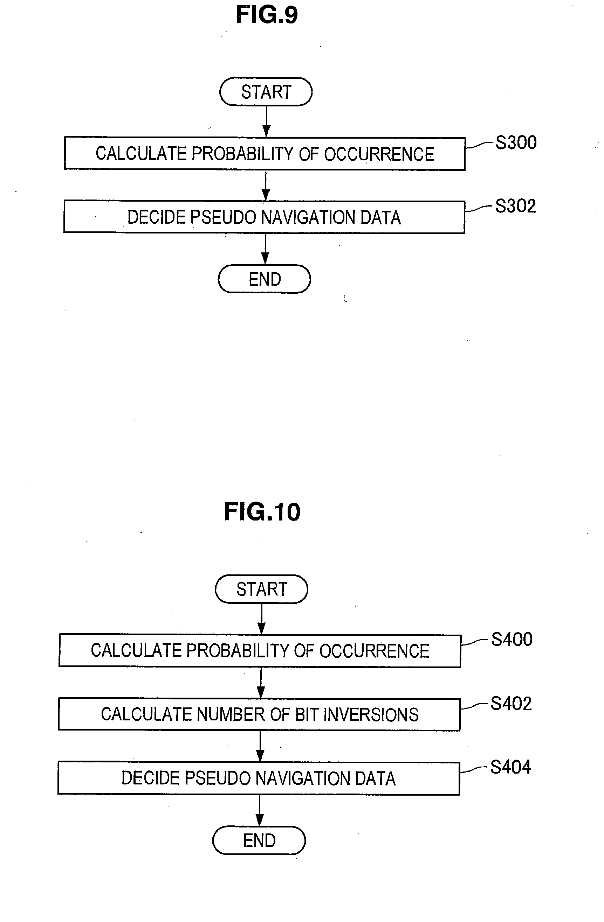

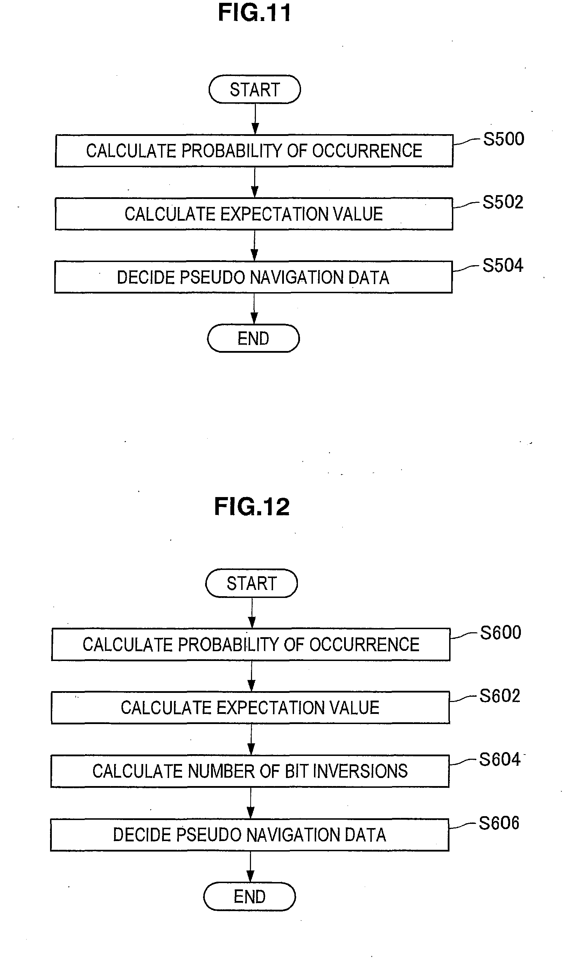

Next, the pseudo navigation data generating unit 124 of the GPS receiver 100 generates the pseudo navigation data by executing a first pseudo navigation data generating process of Fig. 9, a second pseudo navigation data generating process of Fig. 10, a third pseudo navigation data generating process of Fig. 11, or a fourth pseudo navigation data generating process of Fig. 12, which will be described later (step S202). Then, the pseudo navigation data generating unit 124 causes the pseudo navigation data generated in step S202 to be held in the pseudo navigation data holding unit 128 of the GPS receiver 100, and then ends the present process.

Fig. 9 is a flowchart of the first pseudo navigation data generating process executed in step S202 in the pseudo navigation data generating process of Fig. 8.

Referring to Fig. 9, the pseudo navigation data generating unit 124 of the GPS receiver 100 calculates a probability of occurrence of each bit pattern of a bit string having a bit length N in the navigation data acquired in step S200 (step S300).

Next, the pseudo navigation data generating unit 124 decides the bit string of the bit length N to be used as the pseudo navigation data based on the calculation result of step S300 (step S302), and then ends the present process.

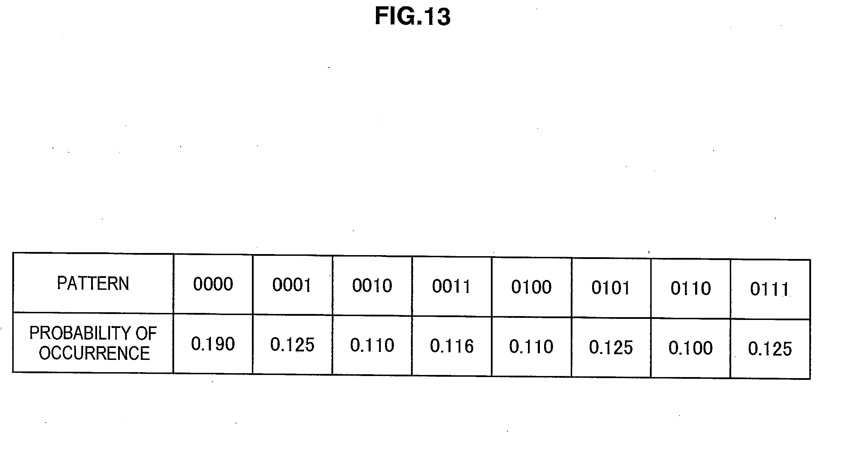

For example, when the bit length is 4 as illustrated in Fig. 13, probability of occurrence of each bit pattern in the navigation data is calculated. Here, patterns in which "0" and "1" are inverted such as "0001" and "1110" are dealt with as the same pattern. Then, based on the calculation result of the probability of occurrence, a bit pattern having the highest probability of occurrence, that is, "0000" is decided as the bit string used as the pseudo navigation data. As a result, the navigation data by which the GPS signal is multiplied is efficiently removed, and thus the receiving sensitivity of the GPS signal can be improved. In the following description, the example in which the bit length is 4 will be given, but, needless to say, the bit length is not limited to 4, and any bit length may be used. In addition, the calculation result of the probability of occurrence illustrated in Fig. 13 is an example, and it is obvious that the calculation result differs according to the acquired navigation data.

Fig. 10 is a flowchart of the second pseudo navigation data generating process executed in step S202 in the pseudo navigation data generating process of Fig. 8.

Referring to Fig. 10, the pseudo navigation data generating unit 124 of the GPS receiver 100 calculates a probability of occurrence of each bit pattern of a bit string having a bit length N in the navigation data acquired in step S200 (step S400).

Next, the pseudo navigation data generating unit 124 calculates the number of bit inversions of each bit pattern of the bit string having the bit length N (step S402). For example, in the bit string of "0110," since a bit between a first bit and a second bit remains inverted and a bit between a third bit and a four bit remains inverted, the number of bit inversions is 2.

Next, the pseudo navigation data generating unit 124 decides the bit string of the bit length N to be used as the pseudo navigation data based on the calculation result of step S400 and the calculation result of step S402 (step S404), and then ends the present process.

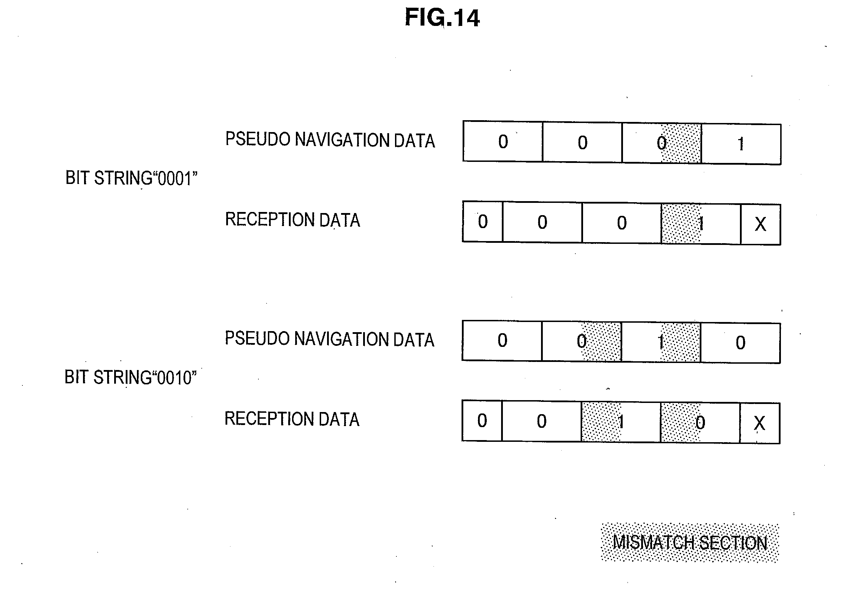

For example, in the case in which the bit length is 4 as illustrated in Fig. 13, when the probabilities of occurrence of "0001" and "0010" are both the highest, if a multiplication timing at which the reception data is multiplied by the pseudo navigation data is mismatched as illustrated in Fig. 14, a bit string of bit patterns that are smaller in the number of mismatch sections, that is, "0001," is decided as the pseudo navigation data. In other words, when a multiplication timing at which the reception data is multiplied by the pseudo navigation data is mismatched as illustrated in Fig. 14, if the number of bit inversions increases, the number of mismatch sections increases, and a bit string of bit patterns that is smaller in the number of mismatch sections is decided as the bit string to be used as the pseudo navigation data. As a result, even when a multiplication timing at which the reception data is multiplied by the pseudo navigation data is mismatched, the navigation data by which the GPS signal is multiplied is efficiently removed, and thus the receiving sensitivity of the GPS signal can be improved.

Fig. 11 is a flowchart of the third pseudo navigation data generating process executed in step S202 in the pseudo navigation data generating process of Fig. 8.

Referring to Fig. 11, the pseudo navigation data generating unit 124 of the GPS receiver 100 calculates a probability of occurrence of each bit pattern of a bit string having a bit length N in the navigation data acquired in step S200 (step S500).

Next, the pseudo navigation data generating unit 124 calculates an expectation value of a gain of the synchronous addition result when a plurality of bit strings of the bit length N that differ in the bit pattern are used as the pseudo navigation data (step S502).

Next, the pseudo navigation data generating unit 124 decides a plurality of bit strings of the bit length N that differ in the bit pattern which are to be used as the pseudo navigation data based on the calculation result of step S500 and the calculation result of step S502 (step S404), and then ends the present process.

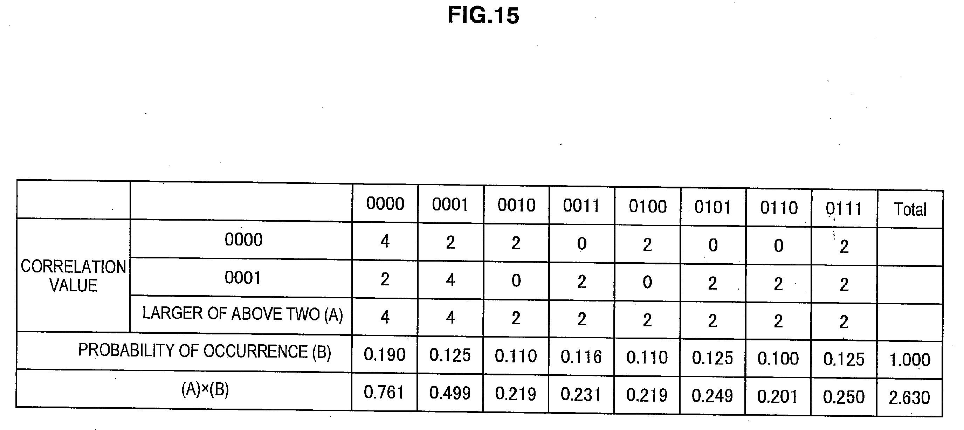

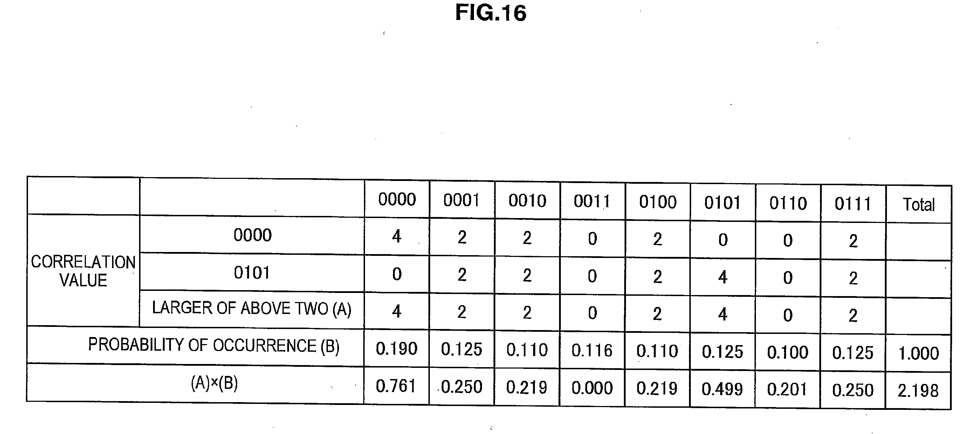

For example, when the bit length is 4 as illustrated in Fig. 13, if there are plenty of software/hardware resources and two bit strings are used as the pseudo navigation data, "0000" that is highest in probability of occurrence and one of "0001," "0101," and "0111" that are next highest in probability of occurrence are used as the pseudo navigation data. In this case, as illustrated in Figs. 15 and 16, expectation values of a gain of the synchronous addition result when "0000" and "0001" are used as the pseudo navigation data and expectation values of a gain of the synchronous addition result when "0000" and "0101" are used as the pseudo navigation data (a case in which "0000" and "0111" are used is omitted) are calculated, and a combination that is higher in an expectation value of a gain, that is, "0000" and "0001," is used as the pseudo navigation data. As a result, even when a plurality of bit strings that differ in the bit pattern are used as the pseudo navigation data, the navigation data by which the GPS signal is multiplied is efficiently removed, and thus the receiving sensitivity of the GPS signal can be improved.

In addition, in Figs. 15 and 16, when "0000" is used as the pseudo navigation data and the reception data is "0000," since 4 bits match, a correlation value is 4. Further, when "0000" is used as the pseudo navigation data and the reception data is "0001," since 3 bits match but 1 bit does not match, a correlation value is 2. Further, when "0000" is used as the pseudo navigation data and the reception data is "0011," since 2 bits match but 2 bits do not match, a correlation value is zero (0). In other words, the correlation value has an absolute value (of the number of matched bits - the number of mismatched bits).

As illustrated in Fig. 15, when "0000" and "0001" are used as the pseudo navigation data, no matter what bit string is used as the reception data, the correlation value does not become zero (0), and the expectation value has a large value of 2.630. On the other hand, as illustrated Fig. 16, when "0000" and "0101" are used as the pseudo navigation data, no matter what bit string is used as the reception data, the correlation value may be zero (0), and thus the expectation value is 2.198 and smaller than in the case illustrated in Fig. 15. As a result, a combination that is higher in an expectation value of a gain, that is, "0000" and "0001," is decided as the pseudo navigation data.

In the pseudo navigation data generating process of Fig. 11, the probability of occurrence is calculated in step S500, but the pseudo navigation data may be decided based on only the calculation result of the expectation value in step S502 without calculating the probability of occurrence. In this case, preferably, in all combinations of all bit patterns, the expectation value is calculated, and a combination that is high in the expectation value is decided as the pseudo navigation data.

Fig. 12 is a flowchart of the fourth pseudo navigation data generating process executed in step S202 in the pseudo navigation data generating process of Fig. 8.

Referring to Fig. 12, the pseudo navigation data generating unit 124 of the GPS receiver 100 calculates a probability of occurrence of each bit pattern of a bit string having a bit length N in the navigation data acquired in step S200 (step S600).

Next, the pseudo navigation data generating unit 124 calculates an expectation value of a gain of the synchronous addition result when a plurality of bit strings of the bit length N that differ in the bit pattern are used as the pseudo navigation data (step S602).

Next, the pseudo navigation data generating unit 124 calculates the number of bit inversions of each bit pattern of the bit strings of the bit length N (step S604).

Next, the pseudo navigation data generating unit 124 decides a plurality of bit strings of the bit length N that differ in the bit pattern which are to be used as the pseudo navigation data based on the calculation result of step S600, the calculation result of step S602, and the calculation result of step S604 (step S606), and then ends the present process.

For example, when the expectation value when "0000" and "0001" are used as the pseudo navigation data is the same as the expectation value when "0000" and "0101" are used as the pseudo navigation data in Figs. 15 and 16, the bit string of the bit pattern that is smaller in the number of bit inversions is decided as the bit string to be used as the pseudo navigation data as described above with reference to Fig. 14. In other words, "0000" and "0001" are decided as the pseudo navigation data. As a result, even when a multiplication timing at which the reception data is multiplied by the pseudo navigation data is mismatched, the navigation data by which the GPS signal is multiplied is efficiently removed, the receiving sensitivity of the GPS signal can be improved.

In the pseudo navigation data generating process of Fig. 12, the probability of occurrence is calculated in step S600, but the pseudo navigation data may be decided based on only the calculation result of the expectation value in step S602 without calculating the probability of occurrence. In this case, preferably, in all combinations of all bit patterns, the expectation value is calculated, and a combination that is high in the expectation value is decided as the pseudo navigation data.

According to the present embodiment, the GPS receiver 100 generates the pseudo navigation data using the received navigation data. Thus, even when the property of navigation data is changed, it is possible to generate and use optimal pseudo navigation data at all times.

Further, the present invention may be implemented such that a storage medium storing a program code of software for implementing the functions of each embodiment is supplied to a system or an apparatus, and a computer (the CPU, a micro processing unit (MPU), or the like) of the system or the apparatus reads and executes the program code stored in the storage medium.

In this case, the program code read from the storage medium implements the functions of each embodiment, and the program code and the storage medium storing the program code configures the present invention.

For example, a floppy (a registered trademark) disk, a hard disk, a magnetooptical disc, an optical disc such as a compact disc read only memory (CD-ROM), a compact disc read recordable (CD-R), a compact disc rewritable (CD-RW), a digital versatile disc read only memory (DVD-ROM), a digital versatile disc random access memory (DVD-RAM), a digital versatile disc rewritable (DVD-RW), or a digital versatile disc+rewritable (DVD+RW), a magnetic tape, a non-volatile memory card, or a read only memory (ROM) may be used as the storage medium used to supply the program code. Further, the program code may be downloaded via a network.

Further, in addition to the case in which the functions of each embodiment are implemented by executing the program code read by the computer, all or part of the actual process may be performed by an operating system (OS) operating on a computer based on an instruction of the program code, and the functions of each embodiment may be implemented by the process.

In addition, the program read from the recording medium may be written in a memory included in a functionality expansion board inserted into a computer or a functionality expansion unit connected to a computer, then the CPU or the like included in the expansion board or the expansion unit having the expanded function may perform all or part of the actual process based on an instruction of the program code, and the function of each embodiment may be implemented by the process.

The preferred embodiments of the present invention have been described above with reference to the accompanying drawings, whilst the present invention is not limited to the above examples, of course. A person skilled in the art pertaining to the present disclosure may find various alternations and modifications within the scope of the appended claims, and it should be understood that they will naturally come under the technical scope of the present invention.

### Reference Signs List

100 GPS receiver
102 antenna
104, 106, 108 multiplier
110 integrator
120 control unit
122 navigation data acquiring unit
124 pseudo navigation data generating unit
126 navigation data storage unit
128 pseudo navigation data holding unit
200 GPS transmitter
202, 204multiplier
206 antenna

## Claims

1. A receiver apparatus, comprising:
a receiving unit that receives a global positioning system (GPS) signal from a satellite in a GPS;
a multiplying unit that multiplies the GPS signal received by the receiving unit by pseudo navigation data; and
an integrating unit that performs a synchronous addition on a signal, in which navigation data is removed from the GPS signal, serving as an output from the multiplying unit.

2. The receiver apparatus according to claim 1, further comprising:
a storage unit that stores the navigation data included in the GPS signal received by the receiving unit; and
a generating unit that generates the pseudo navigation data using the navigation data stored in the storage unit.

3. The receiver apparatus according to claim 2,
wherein the generating unit calculates a probability of occurrence of each of all bit patterns of a bit string of a bit length N in the navigation data, and decides a bit string of a bit length N to be used as the pseudo navigation data based on a calculation result.

4. The receiver apparatus according to claim 2 or 3,
wherein the generating unit calculates an expectation value of a gain of a result of the synchronous addition when a plurality of bit strings of the bit length N that differ in a bit pattern are used as the pseudo navigation data, and decides a plurality of bit strings of the bit length N that differ in the bit pattern which is to be used as the pseudo navigation data based on a calculation result.

5. The receiver apparatus according to claim 3 or 4,
wherein the generating unit calculates a number of bit inversions of each of all the bit patterns of the bit string of the bit length N, and decides a bit string of the bit length N to be used as the pseudo navigation data based on a calculation result.

6. A reception method, comprising the steps of:
receiving a global positioning system (GPS) signal from a satellite in a GPS;
multiplying the GPS signal received in the step of receiving the GPS signal by pseudo navigation data; and
integrating for performing a synchronous addition on a signal, in which navigation data is removed from the GPS signal, serving as an output in the step of multiplying the GPS signal.

7. A computer program for causing a computer to execute the steps of:
receiving a global positioning system (GPS) signal from a satellite in a GPS;
multiplying the GPS signal received in the step of receiving the GPS signal by pseudo navigation data; and
integrating for performing a synchronous addition on a signal, in which navigation data is removed from the GPS signal, serving as an output in the step of multiplying the GPS signal.
